# NEUE EUROPÄISCHE PATENTSCHRIFT

(11) **EP 0 399 418 B2**
(45) Veröffentlichungstag und Bekanntmachung des Hinweises auf die Entscheidung über den Einspruch: **04.12.2002**
(45) Hinweis auf die Patenterteilung: 19.07.1995
(21) Anmeldenummer: 90109557.0
(22) Anmeldetag: 19.05.1990
(51) Int. Cl.: G09B 9/30, G09B 9/44

(54) **Verfahren und Einrichtung zum Missionstraining von Fluggeräten**
Method and device for mission-training for airborne vehicles
Méthode et dispositif pour l'entrainement des missions pour aéronefs

(30) Priorität: 20.05.1989 DE 3916545
(43) Veröffentlichungstag der Anmeldung: 28.11.1990
(73) Patentinhaber: EADS Deutschland GmbH, 81663 München (DE)
(72) Erfinder: Kubbat, Wolfgang, Prof. Dr., D-6104 Seeheim 1 (DE)

(56) Entgegenhaltungen:
- EP-A- 0 282 364
- DE-A- 2 632 919
- GB-A- 2 144 608
- US-A- 4 424 038
- IEEE NATIONAL AEROSPACE AND ELECTRONICS CONFERENCE NAECON 1988 Band 1, 23.-27.Mai 1988, Seiten 209-216; P.J. BENNETT:"Enhanced navigation and displays from passive terrain referenced avionics"
- PATENT ABSTRACTS OF JAPAN Band 12, Nr. 331 (P-755)(3178), 7. September 1988;& JP - A - 63094375 (TATSUMI DENSHI)

## Beschreibung

Die Erfindung bezieht sich auf ein Verfahren zum Missionstraining für Fluggeräte, bei dem während des Fluges dem Piloten Gelände- und Fortbewegungsszenen sichtbar auf einem entfernbaren Schirm simuliert werden, gemäß dem Oberbegriff des Anspruchs 1.

Missionstrainingssysteme sind an sich in den verschiedensten Ausführungsformen bekannt. In der überwiegenden Mehrzahl handelt es sich hierbei um sogenannte Bodensimulatoren. Der Nachteil dieser Geräte besteht vor allem in ihrem mangelhaften Bewegungsverhalten. Es ist nicht möglich, schnelle Flugzeuge, insbesondere Kampfflugzeuge so nachzusimulieren, daß die Bewegungen eines "fliegenden Cockpits" ein Verhalten zeigen, welches dem Piloten mindestens subjektiv das Gefühl vermittelt, in einem wirklichen Flugzeug zu sitzen und einen Echtflug zu absolvieren. Durch das hiermit verbundene Ausbleiben der physischen Streßkomponente, verringert sich der Ausbildungswert der Bodensimulation. Es sind daher Echtflüge absolut unerläßlich. Dies trifft in besonderem Maße für das Tiefflugtraining zu, was wiederum zu Belästigungen und Gefährdung der Bevölkerung führt.

Durch die Druckschrift IEEE National Aerospace and Electronics Conference NAECON 1988, Band 1, 23. bis 27. Mai 1988, Seiten 209 - 216, P.J. Benett, ist eine Einrichtung der eingangs genannten Art bekanntgeworden, mit der es jedoch nicht möglich ist, alle Einrichtungen von einer externen Stelle aus zu manipulieren. Dies trifft auch für die aus der US-A- 4 424 038 bekannten Flugzeug-Trainingseinrichtung zu.

Ein Missionstrainingssystem der eingangs genannten Art ist auch aus der DE-OS 26 32 919 bekannt. Hier werden Fluginformationen auf einen Schirm an derWindschutzscheibe projeziert, wobei dieser Schirm in Funktionsstellung ein- und ausschwenkbar ist. Ein echtes Tiefflugtraining und eine Simulation hierfür ist jedoch mit dieser Einrichtung nicht möglich

Der vorliegenden Erfindung liegt die Aufgabe zugrunde, ein Missionstrainingssystem der eingangs genannten Art zu schaffen, das im Originalfluggerät oder einem ihm entsprechenden Trainingsfluggerät allein oder im Verband mit anderen Fluggeräten dem oder den Piloten trotz Höhenflug echte Tiefflugbedingungen simuliert.

Diese Aufgabe wird durch die im Anspruch 1 aufgezeigten Maßnahmen gelöst.

In der nachfolgenden Beschreibung sind Ausführungsbeispiele erläutert sowie in den Figuren der Zeichnung skizziert. Es zeigen:
- Fig. 1: ein Schemabild eines Fluggerätes mit ansetz- und anschließbarer Missionstrainings-Baueinheit,

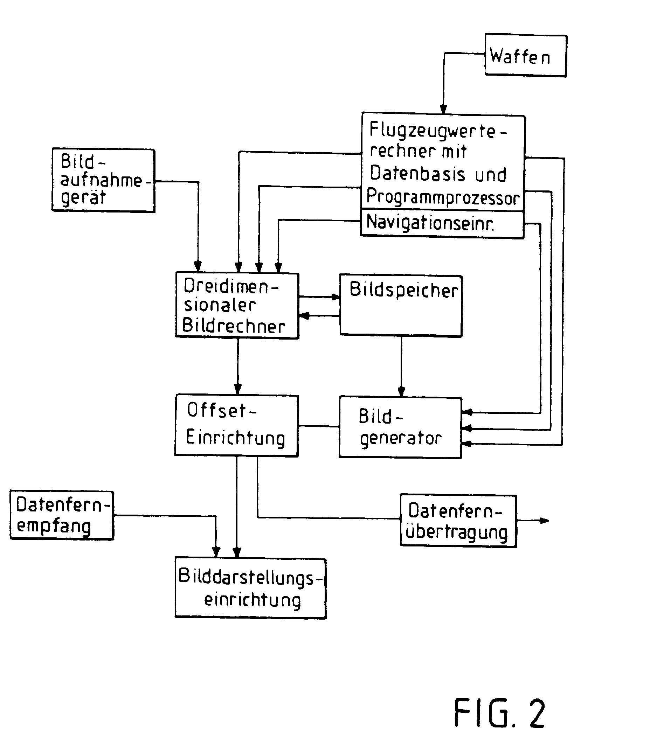

- Fig. 2: ein Blockschaltbild bezüglich des funktionellen Zusammenwirkens der einzelnen Einrichtungen von Fluggerät, Flugsteuerung, Bildgenerierung und Bilddarstellung in vereinfachter und schematischer Darstellung,
- Fig. 3: ein Blockschaltbild der Bilddarstellung mit überlagerten militärischen Bedrohungen für das Missionstrainings-Fluggerät in schematischer Darstellung,
- Fig. 4: ein Blockschaltbild für die Datenfernübertragung zum Formations- bzw. Verbandsflug mit Data-Link-Gerät in vereinfachter und schematischer Darstellung,
- Fig. 5: ein Diagramm über den Einfluß der Flughöhe auf den Schall-Maximalpegel unterhalb der Flugspur.

Im Tiefflug durchzuführende Missionen erfordern einen sehr hohen Ausbildungsstand und Erfahrungsschatz des Piloten, was in der Hauptsache nur durch eine hohe Anzahl von Echtflügen gewonnen werden kann. Daß hiermit nicht nur eine hohe Gefährdung für Flugzeug und Piloten gegeben ist, sondern auch eine solche für die Bevölkerung, zu der noch die hohe Lärmbelästigung hinzukommt, ist bekannt. Trotz allem ist es im Sinne einer optimalen Schutz- und Verteidigungsübernahme für diese Bevölkerung unerläßlich, dieses Tiefflugtraining an "echtem" Gerät und unter "echten" Bedingungen durchzuführen. Hierzu wird nun vorgeschlagen, ein Missionstrainingssystem zu schaffen, mit dem unter echten Bedingungen ein Tiefflug "echt" simuliert wird und das Fluggerät 10 hierbei in Höhen zwischen 1000 und 3000m - unter gewissen Umständen auch höher - fliegt. Das heißt, dem Piloten wird hinsichtlich der Instrumente des Fluggerätes 10 "vorgetäuscht", daß er sich in Bodennähe befindet. Da der Pilot neben den Instrumenten auch den Sichteindruck als empfundene Realität mitbewertet, wird ihm dieser Sichteindruck künstlich so erzeugt, daß er eine Übereinstimmung zwischen den "manipulierten" Instrumenten und der Sicht so empfindet, als würde er in Bodennähe fliegen, während er in Wirklichkeit sich in den angegebenen Höhen von vorzugsweise 1000 bis 3000 m befindet und dort agiert.

Nun kann diese künstliche Sichterzeugung auch so manipuliert werden, daß der Pilot beispielsweise über freier See trainiert, ihm aber per Sicht und Instrumente ein Echteindruck vermittelt wird, als befände er sich über einer Landschaft mit Höhen und Tälern etc., also in einem völlig anderen Gebiet.

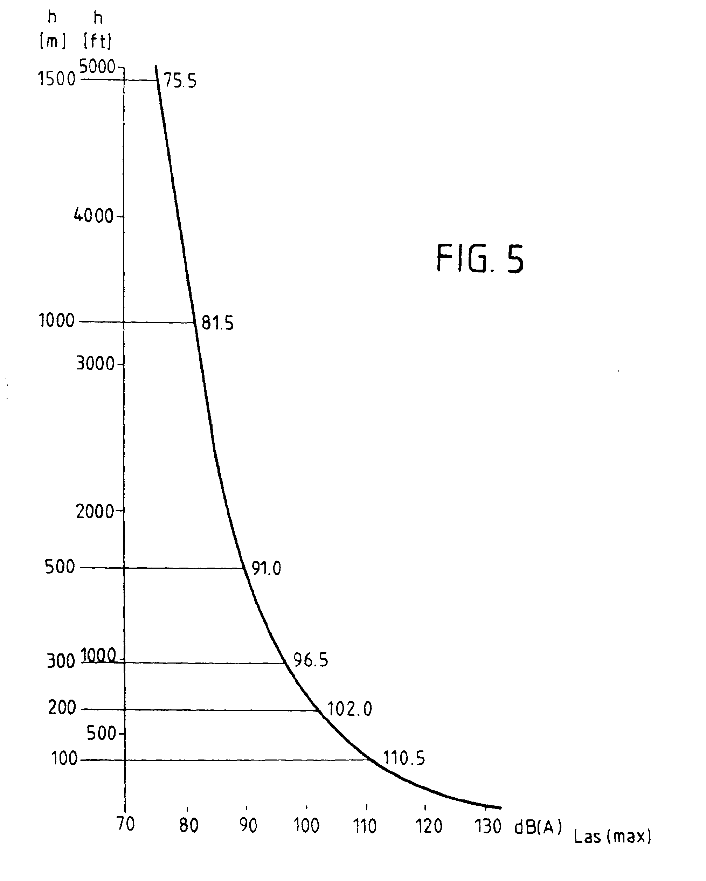

Zur Verwirklichung eines solchen Missionstrainingssystems wird nun vorgeschlagen, daß während des tatsächlichen Fluges aus den zu speichernden bzw. gespeicherten Informationen dreidimensionale bewegte Bilder generiert oder abgerufen und modifiziert werden, wobei die Bewegung der Bilder in eindeutigem Zusammenhang mit der Fluggerätebewegung gebracht wird. Hierzu werden die an Bord des Fluggerätes 10 befindlichen Trägheitsmeßeinrichtungen zusammen mit den vorhandenen anderen Meßeinrichtungen und Präzisions-Navigationseinrichtungen - wie beispielsweise LORAN, TERCOM, GPS usw. verwendet. Um nun der Besatzung des trainierenden Fluggerätes 10 den Sichteindruck zu vermitteln, als würde sie in Bodennähe über dichtbesiedeltes und -bewachsenes Gebiet fliegen, während der tatsächliche Flug in großer Höhe, über See oder unbewohntem Gebiet stattfindet, wird nun der Ausgangspunkt für die Bildbewegung gegenüber der tatsächlichen Flugbewegung in den Koordinaten und in der Höhe verschoben, der realen Höhe also ein sogenanntes "Offset" in Form einer konstanten ausgewählten Höhe - wie bereits beispielsweise angegeben - von 1000 bis 3000m aufaddiert. Dies ist problemlos zu realisieren, wenn die verwendeten Fluggeräte - was zweifelsfrei bei jedem bekannten Kampfflugzeugtyp der Fall ist - elektrisch oder elektronisch gesteuerte Höhenmeß-Instrumente aufweist. Der angegebene Höhenbereich wird deshalb vorgeschlagen, weil diese Höhenverschiebung vorteilhafter Weise kaum spürbare Beeinflussungen der Flugeigenschaften hervorruft, dagegen ist der Einfluß der Flughöhe auf den Schall-Maximalpegel unterhalb der Flugspur doch schon als ganz erheblich und damit ebenfalls sehr vorteilhaft zu bezeichnen, wie das Diagramm in Fig. 5 beweist.

Es ist also die Möglichkeit geschaffen worden, ein Missionstraining derart abzuhalten, daß ein Flugtraining über einem Gebiet A stattfindet, der Besatzung jedoch im Hinblick auf die Sichtinformation und die Navigation der Eindruck vermittelt wird, sich über dem Gebiet B zu befinden und sich mit den Gegebenheiten von B vertraut zu machen, ohne physisch dort gewesen zu sein.

Weiterhin wird vorgeschlagen, die dreidimensionalen an Bord generierten Bilder der Besatzung über geeignete Anzeige- bzw. Bilddarstellungs-Einheiten an Stelle der Außensicht darzubieten. Solche Anzeigeeinheiten können beispielsweise sein: Liquid Crystal Displays, die heute eine hohe Qualität erreicht haben, Kathodenstrahlröhren CRT, Helmet Mounted Displays, Plasma-Displays oder holographische Displays. Gerade LCD- und Plasma-Displays bieten die Möglichkeit, in vorhandenen Cockpits Sichtsysteme so nachzurüsten, daß die Umwandlung eines normalen Cockpits in ein Missionstrainer-Cockpit ohne großen Aufwand möglich ist. Die jeweilige Bilddarstellungseinheit ist jederzeit, insbesondere während des Start- und Landevorganges zur freien Außensicht entfernbar, beispielweise durch Ausschwenken oder Wegklappen, so daß der Flugbetrieb in üblicher Art - also ohne das vorgeschlagene Missionstrainingssystem - problemlos wieder aufgenommen werden kann.

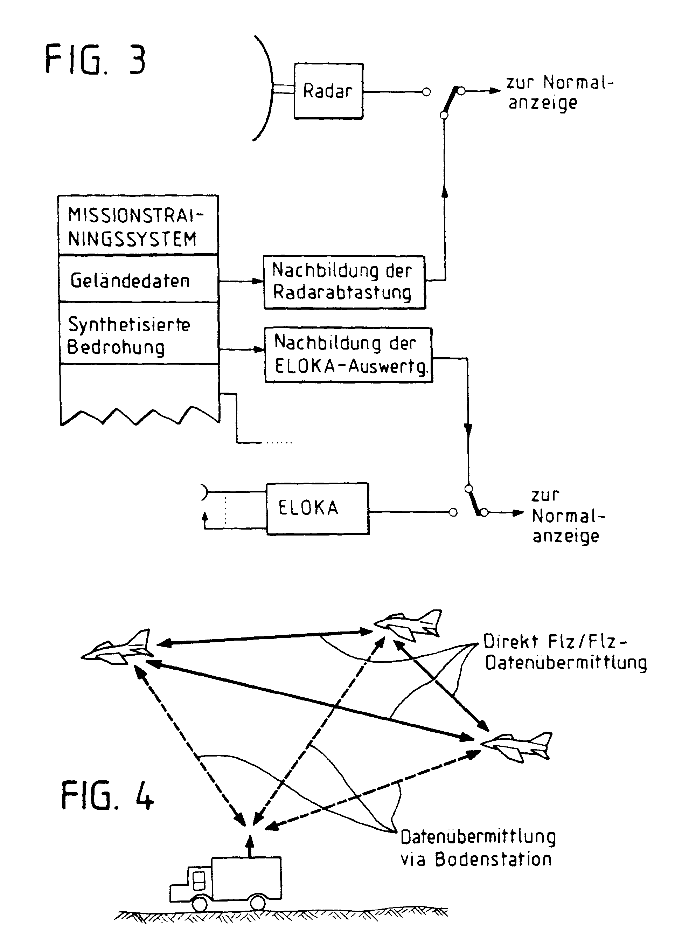

Das vorstehend erläuterte System kann nun noch komplexer ausgeführt werden. Hierzu wird vorgeschlagen, die Darstellung des überflogenen Geländes durch rechner- oder datenbasis-generierte Informationen über militärische Ziele, taktische Bedrohungen durch feindliche Flugzeuge oder Flugabwehrsysteme zu ergänzen und zwar so, wie sie bei einem Echtflug auftreten können. Zusätzlich zur Sichtdarstellung wird die Bedrohung und auch die Ortung von Zielen aufgrund einer Datenbasis so ergänzt, daß neben der genannten Sichtdarstellung auch die Anzeigen anderer Geräte im Flugzeug - wie beispielsweise Radar, ELOKA usw. - so stimuliert oder simuliert werden, daß die Besatzung den Eindruck von Echtzielen und Echtbedrohung vermittelt bekommt. Die Fig. 3 zeigt ein Blockschaltbild der Bilddarstellung mit überlagerter militärischer Bedrohungssimulation für das Missionstrainings-Fluggerät und zwar in der Trainings-Schaltungsposition

Zur Realisierung der vorgeschlagenen Sichtgeneration sind verschiedene Lösungen möglich, die nachfolgend kurz angesprochen werden. So ist eine sogenannte "TV-Live-Generierung" möglich, bei der Fernsehbilder, die während eines Fluges aus dem Flugzeug live aufgenommen worden sind, dem Piloten dargestellt werden. Weiterhin ist eine "TV-Record-Generierung" durchführbar, bei dem nach TV-Bildern geflogen wird, die im Tiefflug aufgezeichnet worden sind und außerdem ist eine CGI-Generation (computer generated images) eine sehr gute Lösungsmöglichkeit. Für die Zukunft dürften holographische Darstellungen in Betracht zu ziehen sein.

Zur weiteren Komplexität des Systems trägt auch bei, wenn zusätzlich zur künstlich erzeugtenAußensichtdarstellung von Waffen, das Abgangsverhalten, die Trajektorien und die Waffenwirkung im Bordrechner ermittelt werden und der bei einer echten Waffenauslösung sichtbare Teil in die Außensichtdarstellung so integriert wird, daß die Besatzung den Eindruck einer echten Waffenauslösung und Waffenwirkung im Flug über und in Bezug zu dem dargestellten Scenario vermittelt bekommt

Das vorstehend erläuterte Missionstrainingssystem läßt sich aber noch weiter optimieren, indem es mit einer wechselseitigen Datenfernübertragung zu anderen Flugzeugen ausgestattet wird. Dies ist für das Training von Verbandsflügen, gemeinsamen Aktionen zur Feindbekämpfung usw. von besonderer Bedeutung. Hierbei wird von einem im Missionstraining befindlichen Fluggerät seine Position, seine Manöver und seine simulierten Waffeneinsätze über dem simulierten Scenario anderen mitfliegenden Fluggeräten, die über dem gleichen Scenario ebenfalls mittels des hier vorgeschlagenen Missionstrainingsystems agieren, laufend automatisch mitgeteilt. Die jeweils erhaltenen Daten werden dazu benutzt, in dem jeweiligen Fluggerät die jeweils anderen Fluggeräte in die künstlich hergestellte Außensichtdarstellung so zu integrieren, daß das Missionstraining im Verband von Flugzeugen ermöglicht wird. Die Fig. 4 zeigt ein Schemabild für die Datenübertragung zum Formations- oder Verbandsflug zu einer Bodenstation und zur Gewährleistung der Konfliktfreiheit sowie als sogenannte "Ground based variante"einerseits und von Flugzeug zu Flugzeug andererseits.

Nun wird weiterhin während des Missionstrainings das Verhalten eines oder mehrerer gegnerischer Fluggeräte und deren Waffen sowie avionischer Ausrüstung simuliert und im Cockpit mit den zuvor beschriebenen Mitteln der Eindruck erweckt, als würde tatsächlich eine Auseinandersetzung mit feindlichen Fluggeräten erfolgen.

Zur Navigation ist auszuführen, daß während eines Fluges mit dem vorstehend beschriebenen Missionstrainingssystem die Konfliktfreiheit mit anderen Flugzeugen von außen durch die Flugkontroll- und Flugsicherungsstellen gewährleistet werden muß. Der Pilot selbst ist, da ihm eine völlig andere Situation dargestellt wird, hierzu definitiv nicht in der Lage. Andererseits muß die von ihm kommandierte Bewegung des Flugzeuges in echter Relation zur Bewegung des ihm dargestellten Bildes stehen. Dies bedingt das Vorhandensein einer Navigation, bevorzugt einer Trägheitsnavigation. Diese hat zwei Aufgaben zu erfüllen, nämlich muß sie gemäß den realen Flugbewegungen den Bildablauf so steuern, wie das Missionstraining es verlangt, d.h. der Pilot kann beispielsweise über See fliegen, aber alle ihm dargebotenen Informationen vermitteln ihm einen Tiefflug - beispielsweise über Oberbayern - und dies inclusive der Sicht. Die andere Aufgabe ist, die Durchführung der "üblichen" - also der flugzeugseitigen Normalnavigation.

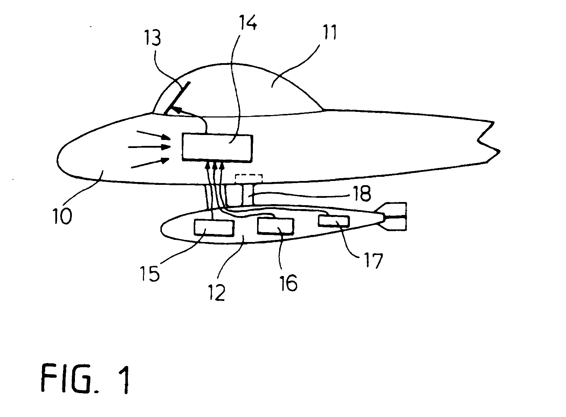

Hinsichtlich der Realisierung des vorgeschlagenen Missionstrainingssystems sind verschiedene Varianten möglich. Bei der ersten Variante, - die in Fig. 1 skizziert ist - werden die erforderlichen Geräte wie Sichtgenerierungseinrichtung 15, Signalverarbeitungseinrichtung 16 und Navigationseinrichtung (IN/AMSU) 17 weitgehend in einem am Fluggerät 10 anzubringenden Behälter 12 installiert, der mit einem Lastenschloß 18 in die entsprechende, schon im Fluggerät 10 vorhandene Verriegelungseinrichtung eingreift und problemlos schnell an-und abgebaut werden kann. Im Cockpit 11 ist eine ein-und ausschwenkbare oder ansetz- und abnehmbare Sichtdarstellung bzw. Bilddarstellungseinheit angeordnet. Zwischen Außenbehälter und Cockpit sind die Signalverbindungen gelegt. Damit ist ein von Fluggerätetypen unabhängiges System geschaffen.

Natürlich sind auch typenspezifische Ausführungsformen möglich. Hier werden die erforderlichen vorbeschriebenen Einrichtungen, Geräte und Bauteile in und am jeweiligen Fluggerätetyp installiert, so daß dieses nur als Trainings-Fluggerät verwendet werden kann.

Weiterhin ist eine sogenannte "Ground Based System"-Variante gegeben. Hier befinden sich Teile des Missionstrainingssystems während des Trainings außerhalb des Fluggerätes, also beispielsweise in einer Bodenstation. Die notwendige Informationsübertragung erfolgt durch einen Data-Link zwischen den Bordteilen und dem externen Teil.

## Patentansprüche

1. Verfahren zum Missionstraining von Fluggeräten, bei dem während des Fluges dem Piloten Gelände- und Fortbewegungs-Szenen auf einem ansetz- und wieder entfernbaren Schirm simuliert werden wobei mittels Trägheits-, Luftwerte-, Entfemungs- und Höhenmeß- sowie Präzisionsnavigations-Einrichtungen an Bord des Fluggerätes dem Piloten und übrigen Cockpit-Insassen während des Fluges echte oder gespeicherte Außensicht- und Geländedarstellungen als dreidimensionale bewegte Bildinformationen präsentiert werden, **dadurch gekennzeichnet, daß**
a) die Bewegungen der Bilder in eindeutigem Zusammenhang mit der tatsächlichen Flugbewegung des Fluggerätes stehen und
b) der Ausgangspunkt für die Bildbewegung gegenüber der tatsächlichen Flugbewegung in den Koordinaten (Longitude, Latitude) und in der Höhe um einen bestimmten Betrag (1000 m bis 3000 m, gegebenenfalls auch höher) verschoben sind, wobei zur Sichtgeneration Fernsehbilder aus dem Fluggerät während des Fluges "live" aufgenommen oder im Tiefflug aufgezeichnet oder im Bordcomputer generiert hergestellt und dem Piloten höhenverschoben übermittelt werden.

## Claims

1. A method for the mission training of aircraft, in which scenes of terrain and movement are simulated to the pilot during the flight on a screen which can befitted and removed again, wherein by means of inertial, air data and distance- and altitude-measuring devices and of precision navigation devices on board the aircraft, real or stored displays of external views and terrains are presented during the flight as three-dimensional moving image information to the pilot and to other occupants of the cockpit, **characterised in that**
a) the movements of the images are unambiguously associated with the actual movement in flight of the aircraft, and
b) the starting point for image movement is displaced in its coordinates (longitude, latitude), and in its altitude by a defined amount (1000 m to 3000 m, optionally even higher), in relation to the actual flight movement, wherein, for the generation of views, television pictures are produced which are taken "live" from the aircraft during the flight or which are recorded during low-level flying or which are generated in the on-board computer and are transmitted displaced in altitude to the pilot.

## Revendications

1. Procédé d'entraînement de mission sur des aéronefs, suivant lequel des scènes de terrain et d'évolution sont simulées au pilote, pendant le vol, sur un écran pouvant être rapporté et réenlevé, des représentations de vue extérieure et de terrain, réelles ou mémorisées, étant présentées en tant qu'informations d'images tridimensionnelles mobiles au pilote et aux autres occupants du cockpit au moyen de dispositifs de mesure inertielle, de valeurs atmosphériques, de distance et d'altitude ainsi que de dispositifs de navigation de précision à bord de l'aéronef, **caractérisé par le fait que** :
a) les mouvements des images se trouvent en corrélation univoque avec le mouvement de vol réel de l'aéronef, et
b) le point de départ pour le mouvement des images est décalé par rapport au mouvement de vol réel en coordonnées (longitude, latitude) et en altitude d'une valeur déterminée (1000 m à 3000 m, le cas échéant plus), et en vue de la génération des scènes, des images de télévision sont prises "live" à partir de l'aéronef pendant le vol ou sont enregistrées en vol rase motte ou sont générées dans l'ordinateur de bord et sont transmises avec décalage en altitude au pilote.
